# EUROPÄISCHE PATENTANMELDUNG

(11) **EP 2 463 340 A1**
(43) Veröffentlichungstag der Anmeldung: **13.06.2012**
(21) Anmeldenummer: 10194275.3
(22) Anmeldetag: 09.12.2010
(51) Int. Cl.: C08L 75/04, C08K 5/21, C08K 3/00, C08K 5/00, C08K 7/24, C09J 11/06, C08G 18/28, C08G 18/80, C07C 273/18, C09K 3/10

(54) **Thixotrope Polyharnstoffaddukte**

(71) Anmelder: Sika Technology AG, 6340 Baar (CH)
(72) Erfinder: Urban, Claus, 71636 Ludwigshafen (DE)
(74) Vertreter: Sika Patent Attorneys

(57) **Zusammenfassung**

Beschrieben wird die Verwendung eines Nukleierungsmittels bei der Herstellung von Polyharnstoffaddukten aus mindestens einem Amin und mindestens einem Isocyanat, wobei das Nukleierungsmittel zu dem resutierenden Polyharnstoffaddukt aus dem mindestens einen Amin und dem mindestens einen Isocyanat nicht isomorph ist.

## Beschreibung

### Technisches Gebiet

Die vorliegende Erfindung betrifft die Verwendung von speziellen Nukleierungsmitteln bei der Herstellung von Polyharnstoffen. Weiterer Gegenstand der vorliegenden Erfindung sind Polyharnstoffe, welche unter Verwendung der speziellen Nukleierungsmittel erhalten werden.

Ein weiterer Aspekt der vorliegenden Erfindung ist die Verwendung der erfindungsgemäßen Polyharnstoffe als rheologisches Additiv in chemisch vernetzenden Systemen, wie Polyurethansystemen und Systemen auf Basis von Alkoxysilanfunktionellen Prepolymeren, insbesondere zur Steuerung des Thixotropieverhaltens der chemisch vernetzenden Systeme.

### Stand der Technik

Einkomponentige (1 K-PUR) bzw. zweikomponentige Polyurethansysteme (2K-PUR) sowie silanterminierte Prepolymere werden in den unterschiedlichsten technischen Bereichen, beispielsweise als Dichtstoff oder Klebstoff sowie zur Herstellung von Beschichtungen, verwendet. Dabei sind die rheologischen Eigenschaften der Polymersysteme von entscheidender Bedeutung und werden im Allgemeinen in Abhängigkeit des jeweiligen Anwendungsgebiets durch Zugabe spezieller Additive eingestellt. Eine besondere einzustellende Eigenschaft der Polymersysteme ist das Thixotropieverhalten der Polymersysteme, also die Eigenschaft der Polymersysteme im noch nicht ausgehärteten Zustand bei der Einwirkung mechanischer Kräfte, beispielsweise durch Rühren, Schütteln oder Ultraschall, sich zu verflüssigen und nach Beendigung der mechanischen Beanspruchung sich wieder zu verfestigen.

Kleb- und Dichtstoffe werden üblicherweise in Kartuschen, Hobbocks oder Fässern gelagert. Bei der Applikation werden sie durch Pumpen oder durch Auspressen mittels Kartuschenpistolen oder Folgeplatten aus diesem Lagergefäß entnommen und werden typischerweise mittels einer Düse, gegebenenfalls durch einen Statikmischer, auf das zu verklebende oder abzudichtende Substrat appliziert. Um möglichst eine gute Förderung und kleinen Kraftaufwand zu ermöglichen, ist es vorteilhaft, wenn der Kleb- oder Dichtstoff eine möglichst geringe Viskosität aufweist. Andererseits sollte der applizierte Kleb- oder Dichtstoff nach der Applikation in der applizierten Gestalt verbleiben und nicht wegfließen. Dies ist insbesondere bei dicken Schichten oder bei Vertikal- oder Über-Kopf-Applikationen von enormer Wichtigkeit. Um eine möglichst hohe Gestaltbeibehaltung zu ermöglichen ist bei der Applikation eine möglichst hohe Viskosität des Kleb- oder Dichtstoffs von Vorteil.

Das Thixotropieverhalten von chemisch vernetzenden Systemen spielt aber nicht nur im Anwendungsfall eine Rolle, sondern ist bereits bei der Dispergierung von entsprechenden Zusammensetzungen von Bedeutung. Ist beispielsweise die noch nicht ausgehärtete Zusammensetzung zu niedrigviskos, ist eine optimale Dispergierung der härtbaren Zusammensetzung nicht möglich, weil dann ein großer Teil der zugeführten Energie durch das auftretende turbulente Fließverhalten verloren geht. Bei der Lagerung von härtbaren Zusammensetzungen ist ebenfalls eine gewisse Viskosität notwendig, um ein Sedimentieren beispielsweise von Pigmenten und Füllstoffen zu verhindern.

Diese Anforderungen von Förderung und Gestaltbewahrung sind völlig gegenläufig und können durch Additivierung mit einem Thixotropiermittel gelöst werden. Durch diese Additivierung wird der Kleb- oder Dichtstoff, sobald er bewegt wird, dünner und erstarrt wieder nachdem die Bewegung aufhört. Dieser Effekt wird deshalb bei einem Grossteil der kommerziellen Kleb- und Dichtstoffe genutzt. Es wird hierbei üblicherweise dem Klebstoff, beziehungsweise dem mittelviskosen Bindemittel, ein Zusatz beigegeben. Solche Thixotropiermittel sind beispielsweise anorganische Substanzen, wie Bentonite oder pyrogene Kieselsäuren, oder organische Substanzen, wie Ricinusöl-Derivate, spezielle Polyamide oder Polyharnstoffe.

So beschreibt beispielsweise die DE 23 60 019 A ein Polyharnstoff-Thixotropiermittel, welches aus der Umsetzung von primären und/oder sekundären Polyaminen, monofunktionellen Alkoholen und/oder Aminen mit Diisocyanatverbindungen resultiert.

Ein Thixotropiermittel für Polyurethanzusammensetzungen auf Basis eines Harnstoffderivates in einem nicht-diffundierenden Trägermaterial ist beispielsweise in der EP 1 152 019 A1 beschrieben.

Aus der WO 2007/000335 A ist ferner ein Thixotropieadditiv bekannt, welches mindestens zwei unterschiedliche Polyharnstoffverbindungen umfasst, wobei die zweite Polyharnstoffverbindung in der Gegenwart von kolloidalen Teilchen der ersten Polyharnstoffverbindung abgeschieden wird. Dabei dient die Oberfläche der ersten Polyharnstoffverbindung als ein Nukleierungspunkt für die zweite Polyharnstoffverbindung, so dass der zweite Polyharnstoff auf den Nukleierungskeimen des ersten Polyharnstoffs wächst. Im Extremfall kann es dabei sogar zu der Ausbildung einer Kern-Hülle-Struktur kommen, wobei der erste Polyharnstoff den Kern und der zweite Polyharnstoff die Hülle bildet. Die rheologischen und optischen Eigenschaften der Zusammensetzung kann durch Variation der für die Herstellung der Polyharnstoffe verwendeten Edukte und den Reaktionsbedingungen bei der Herstellung der einzelnen Polyharnstoffaddukte gesteuert werden. Typisch für die Vorgehensweise in der WO 2007/000335 A ist somit die Verwendung von einer Polyharnstoffverbindung als Nukleierungsmittel bei der Abscheidung der zweiten Polyharnstoffverbindung. Daher werden auf jeden Fall zwei unterschiedliche Polyharnstoffe benötigt, was die in der WO 2007/000335 A beschriebene Vorgehensweise insgesamt aufwendig macht.

Darüber hinaus betrifft die WO 2007/000335 A die Verwendung der vorstehend beschriebenen Zusammensetzung aus zwei Polyharnstoffverbindungen als rheologiemodifizierendes Additiv in Polyestern, Polyurethanen, Alkydharzen, Acrylharzen und Epoxyharzen in unterschiedlichen Anwendungen, wie in Beschichtungen, Klebstoffen, Tinten und Detergentien.

Aus der WO 2006/075000 A ist die Verwendung von Polyharnstoffverbindungen als rheologiemodifizierendes Mittel bekannt, wobei der Polyharnstoff durch Umsetzung von mindestens einem Polyisocyanat mit mindestens einem nicht-chiralen Monoamin und mindestens einem chiralen Monoamin erhalten wird. Die aus der WO 2006/075000 A bekannte Polyharnstoffverbindung wird zur Steuerung der Thixotropie und ferner als Stellmittel (*sag control agent*) von härtbaren bzw. gehärteten Bindemittelsystemen eingesetzt. Als wesentliche Anwendungsgebiete der rheologiemodifizierenden Mittel werden unter anderem Klebstoffe, Drucktinten, Detergentien, Papiere, Textilien und Baumaterialien genannt, wobei die Polyharnstoffverbindungen in härtbaren Systemen unter anderem auf Basis von Polyurethanen, MelaminFormaldehyd-Systemen, Polycarbonat-Formaldehyd-Systemen und Polyharnstoffen eingesetzt werden.

Auch die WO 2006/074895 A lehrt die Verwendung einer Mischung, umfassend mindestens einen die Thixotropie induzierenden Polyharnstoff in Kombination mit einem weiteren die Thixotropie induzierendes Additiv, zur Verwendung bei der Härtung von Bindemitteln unter anderem auf Basis von Polyestern, Polyurethanen, Alkydharzen und Epoxyharzen. Die beiden die Thixotropie induzierenden Addtive sind so ausgebildet, dass sie bei der Härtungstemperatur des Bindemittels, in welchem sie verwendet werden, in einem festen Zustand verbleiben. Hierfür ist hinsichtlich der Polyharnstoffverbindung vorgesehen, dass sie einen um 10 °C niedrigeren Schmelzpunkt im Vergleich zur Härtungstemperatur des Bindemittels aufweist. Bei dem weiteren, die Thixotropie induzierenden Mittel kann es sich beispielsweise um Silika, Polymere, Mikrogele oder Tonerde handeln; es können allerdings auch Polyharnstoffe als das zweite Additiv verwendet werden, so dass auch in der WO 2006/074895 A eine Ausführungsform beschrieben ist, in welcher das rheologiemodifizierende Mittel eine Zusammensetzung aus zwei unterschiedlichen Polyharnstoffen ist. In dem Fall der Verwendung von zwei (unterschiedlichen) Polyharnstoffen können diese in einer Ausführungsform der WO 2006/074895 A gemeinsam hergestellt und abgeschieden werden.

Die aus dem Stand der Technik bekannten Thixotropieradditive auf Polyharnstoffbasis erfordern bei deren Herstellung die Reaktion von einem Polyisocyanat mit einem Monoamin, welche gegebenenfalls in Gegenwart eines Lösemittels (Weichmacher) durchgeführt wird. Die dabei gebildete Polyharnstoffverbindung ist in dem entsprechenden Reaktionssystem unlöslich und scheidet sich als Niederschlag ab. Diese Niederschlagsbildung erfordert einen Nukleierungsschritt für jeden gebildeten Polyharnstoffpartikel. Wenn dieser Nukleierungsschritt nicht kontrolliert abläuft, werden die Anzahl, die Größe und die Form der festen Polyharnstoffpartikel statistisch beeinflusst. Wenn dieser Nukleierungsschritt nun nicht ausreichend kontrolliert wird, entstehen Polyharnstoffe mit nicht reproduzierbaren Eigenschaften, was deren Verwendung als rheologiemodifizierendes Additiv, insbesondere zur Steuerung der Thixotropie, in härtbaren Bindemittelsystemen erschwert.

Daher besteht Bedarf nach einem Zugang zu rheologiemodifizierenden Additiven auf Basis von Polyharnstoffen, in welchem ein kontrollierbarer Nukleierungsschritt zu Polyharnstoffen führt, die im Wesentlichen konstante Eigenschaften als rheologiemodifizierendes Mittel in chemisch härtbaren Bindemittelsystemen, insbesondere als Thixotropierhilfsmittel und Stellmittel, aufweisen. Die Polyharnstoffe sollen sich dabei insbesondere für die Verwendung in Polyurethansystemen und Systemen auf Basis von Alkoxysilan-funktionellen Prepolymeren eignen.

### Darstellung der Erfindung

Ausgehend von diesem Stand der Technik stellt sich die vorliegende Erfindung die Aufgabe, den zuvor genannten Stand der Technik weiterzuentwickeln und insbesondere die oben beschriebenen Nachteile zu vermeiden.

Insbesondere stellt sich die vorliegende Erfindung die Aufgabe, Polyharnstoffe bereitzustellen, die einerseits als rheologiemodifzierendes Additiv verwendet werden können und andererseits durch ein die Nukleierung steuerndes Verfahren so erhalten werden, dass sie vorzugsweise ein konstantes Eigenschaftsprofil als rheologiemodifizierendes Additiv, insbesondere als Thixotropieradditiv, in chemisch vernetzbaren Bindemittelsystemen aufweisen. Hierzu ist es erforderlich, weitere Nukleierungsmittel zur Verwendung bei der Herstellung von entsprechenden Polyharnstoffen aufzufinden, mit welchen eine Herstellung von Polyharnstoffen mit konstanten rheologiemodifizierenden Eigenschaften möglich ist.

Des Weiteren stellt sich die vorliegende Erfindung die Aufgabe, Stellmittel für härtbare Zusammensetzungen im Allgemeinen und insbesondere für Polyurethansysteme und Systeme auf Basis von Alkoxysilan-funktionellen Prepolymeren aufzufinden, mit welchen vorzugsweise die Standfestigkeit (*sag control*) der gehärteten Zusammensetzung beeinflusst und gesteuert werden kann. Im Rahmen der vorliegenden Erfindung werden unter dem Begriff der Standfestigkeit (*sag control*) insbesondere folgende Eigenschaften der gehärteten Zusammensetzung verstanden:
(1) Die Zusammensetzung ist im Wesentlichen stabil gegenüber einer "Läuferbildung" (Verlauf und Ablauf) bei deren Applikation (keine "Gardinenbildung").
(2) Die Zusammensetzung ist im Wesentlichen stabil gegenüber einer Tropfenbildung bei deren Applikation.
(3) Die Zusammensetzungen können in einer ausreichenden Dicke aufgebracht werden, um die notwendige Dauerhaftigkeit unter Beibehaltung des gewünschten Aussehens (d.h. beispielsweise Glanz, Abbildungsschärfe und Glattheit) zu erreichen.
(4) Bei einem hohen Feststoffgehalt ist die Zusammensetzung im Wesentlichen stabil gegenüber einem Absacken bei deren vertikaler Applikation (beispielsweise als Beschichtung).

Die vorliegende Erfindung basiert auf der Erkenntnis, dass nicht nur Polyharnstoffe selbst als Nukleierungsmittel für Polyharnstoffaddukte dienen können, wie es beispielsweise in der WO 2007/000335 A beschrieben ist, sondern auch andere Additive mit speziellen Eigenschaften diese Aufgabe erfüllen können und dass unter Verwendung dieser Nukleierungsmittel eine Herstellung von Polyharnstoffen mit konstanten rheologiemodifizierenden Eigenschaften möglich ist. Entsprechende Polyharnstoffe weisen daher konstante Eigenschaften als Thixotropiermittel und Stellmittel auf und können daher auch in entsprechenden Zusammensetzungen verwendet werden.

Gelöst werden die der vorliegenden Erfindung zugrundeliegenden Aufgaben daher in einem ersten Aspekt durch die Verwendung eines Nukleierungsmittels bei der Herstellung von Polyharnstoffaddukten, wobei das Nukleierungsmittel zu dem herzustellenden Polyharnstoffaddukt nicht isomorph ist.

Erfindungsgemäß wurde herausgefunden, dass nicht nur Polyharnstoffe selbst als Nukleierungsmittel bei der Herstellung von Polyharnstoffen verwendet werden können, sondern auch andere Additive, die zu dem herzustellenden Polyharnstoff nicht isomorph sind.

Unter einem zu dem herzustellenden Polyharnstoff nicht isomorphen Nukleierungsmittel wird im Rahmen der vorliegenden Erfindung ein Feststoff verstanden, der eine andere Kristallform als der herzustellende Polyharnstoff aufweist oder von amorpher Struktur ist. Die vorliegende Erfindung grenzt sich daher von dem bekannten Stand der Technik durch die Verwendung unterschiedlicher Nukleierungsmittel ab, da die in dem Stand der Technik verwendeten Nukleierungsmittel auf Basis von Polyharnstoffen isomorph zu den herzustellenden Polyharnstoffen sind. In einer bevorzugten Ausführungsform der vorliegenden Erfindung handelt es sich daher bei dem erfindungsgemäß vorgesehenen Nukleierungsmittel auch nicht um einen Polyharnstoff.

Im Folgenden werden bevorzugte Ausgestaltungen des erfindungsgemäß vorgesehenen Nukleierungsmittel näher beschrieben:
Unter dem Prefix "Poly" werden im Rahmen der vorliegenden Erfindung organische Verbindungen verstanden, die formal zwei oder mehr der jeweiligen funktionellen Gruppen aufweisen.

Insbesondere werden unter dem Begriff "Polyurethan" im Rahmen der vorliegenden Erfindung sämtliche Polymere subsumiert, welche nach dem Diisocyanat-Polyadditions-Verfahren hergestellt werden. Dieses schließt auch solche Polymere ein, die nahezu oder gänzlich frei von Urethangruppen sind, wie Polyether-Polyurethane, Polyester-Polyurethane, Polyether-Polyharnstoffe, Polyharnstoffe, Polyester-Polyharnstoffe, Polyisocyanurate, Polycarbodiimde usw.

In einer bevorzugten Ausgestaltung der vorliegenden Erfindung weisen die erfindungsgemäßen Nukleierungsmittel dabei im Wesentlichen keine Löslichkeit in dem Reaktionsmedium, welches zur Herstellung des Polyharnstoffaddukts verwendet wird, auf. Unter im Wesentlichen keine Löslichkeit in dem Reaktionsmedium, welches zur Herstellung des Polyharnstoffaddukts verwendet wird, wird im Rahmen der vorliegenden Erfindung eine Löslichkeit von höchstens 0,5 g/l, bevorzugt höchstens 0,1 g/l, besonders bevorzugt höchstens 0,05 g/l verstanden.

In einer bevorzugten Ausführungsform der vorliegenden Erfindung weist das Nukleierungsmittel eine Teilchengröße von weniger als 500 µm auf. Weiter bevorzugt sind Nukleierungsmittel, welche einen Teilchendurchmesser von weniger als 250 µm aufweisen. Noch weiter bevorzugt sind Nukleierungsmittel, welche einen Teilchendurchmesser von weniger als 100 µm aufweisen. Die dabei angegebene Teilchengröße ist volumenbasiert, d.h. die Teilchengröße entspricht bei nicht-sphärischen Teilchen dem Durchmesser eines theoretischen sphärischen Teilchens, welches das gleiche Volumen wie das vorliegende nicht-sphärische Teilchen aufweist. Bei sphärischen Teilchen entspricht die Teilchengröße dem Teilchendurchmesser.

Die Auswahl geeigneter Teilchengrößen orientiert sich insbesondere an der Notwendigkeit, bei der Polyharnstoffbildung als Nukleierungsmittel zu fungieren. Erfindungsgemäß wurde herausgefunden, dass die vorstehende Teilchengröße eine bevorzugte Nukleierung ermöglicht und dadurch eine Steuerung der rheologiemodifizierenden Eigenschaften des resultierenden Polyharnstoffes in Bindemittelsystemen ermöglicht.

Darüber hinaus ist es bevorzugt, wenn das Nukleierungsmittel bei einer Temperatur von vorzugsweise unterhalb von 150 °C, weiter bevorzugt von unterhalb von 120 °C, besonders bevorzugt von unterhalb von 100 °C, jeweils unter Normaldruck, einen festen Aggregatzustand aufweist und daher insbesondere bei der Polyharnstoffbildung als Nukleierungsmittel fest vorliegt. Insbesondere liegt das Nukleierungsmittel bei Raumtemperatur und Normaldruck fest vor.

Das Nukleierungsmittel kann im Allgemeinen eine anorganische Komponente, eine organische Komponente, eine synthetische Komponente und/oder eine nanopartikuläre Komponente sein.

Wenn das Nukleierungsmittel eine anorganische Komponente ist, so ist diese vorzugsweise ausgewählt aus der Gruppe, bestehend aus Metallen, insbesondere Metallpulvern; Metallfasern; Metalloxiden, wie Magnesiumoxid, Titandioxid, Aluminiumoxid und Spinell, insbesondere in Pulverform; Metallsulfidpulvern; Metallcarbidpulvern; Schwefelpulver; Kohlenstofffasern; Glasfasern; Glasmehlen; Quarzmehl; Silikapulver; Calcit; Glimmer; Talkum; Calciumcarbonat; Gesteinsmehlen; keramischen Pulvern; Diatomeenerde; Aluminiumsilikaten; Flugasche.

Wenn das Nukleierungsmittel eine organische Komponente ist, so ist diese vorzugsweise ausgewählt aus der Gruppe, bestehend aus Kohlenstaub; Pflanzenbestandteile, wie Pollen und Pflanzenfasern; Hefen; Sporen; Zuckerpulvern; Agarpulvern; Gelatinepulvern und Holzstaub.

Wenn das Nukleierungsmittel eine synthetische Komponente ist, so ist diese vorzugsweise ausgewählt aus der Gruppe, bestehend aus Polymerpulvern, wie Kautschukpulvern, Cellulosepulvern und Polymerfasern, insbesondere auf Basis von Polyethylen, Polyvinylchlorid, Polyamiden, Polyestern, Polystyrol und Teflon; Carbonsäureestern und -salze, Benzoaten; Phosphorsäureestern und -salze sowie Sorbitolderivaten; Phosphaten und Gelpartikeln.

Die zuvor genannten Nukleierungsmittel können auch in nanopartikulärer Form vorliegen.

Darüber hinaus können als Nukleierungsmittel auch Kohlenstoffnanotubes verwendet werden.

Die vorstehenden Nukleierungsmittel sind im Allgemeinen kommerziell erhältlich oder dem Fachmann unmittelbar bekannt. Dieses gilt beispielsweise auch für Pflanzenbestandteile, beispielsweise für das kommerziell von Sigma-Aldrich^{®} erhältliche Lycopodium oder für Blüttenpollen, welche beispielsweise von EnergiaVital UG, Prittrichin erhältlich sind.

Insbesondere kann es sich um (Natrium-2,2-methylen-bis-(4,6-di-tert.butylphenol)-phosphat (Na-11) von Asahi Denka und Lycopodium von Sigma-Aldrich^{®} als Nukleierungsmittel.

Darüber hinaus wurde festgestellt, dass mit Hilfe der vorstehenden Nukleierungsmittel die Auspresskraft (*extrusion force*) der resultierenden Polyharnstoffe modifiziert werden kann, wobei einige Nukleierungsmittel zu einer Erhöhung der Auspresskraft und andere Nukleierungsmittel zu einer Verringerung der Auspresskraft führen.

Die zuvor beschriebenen Nukleierungsmittel werden vorzugsweise in der Herstellung von Polyharnstoffen eingesetzt. Polyharnstoffe werden ausgehend von Isocyanaten und Aminen durch Polyaddition erhalten.

Weiterer Gegenstand der vorliegenden Erfindung ist daher eine Zusammensetzung, umfassend mindestens ein Isocyanat, mindestens ein Amin und mindestens ein wie zuvor beschriebenes Nukleierungsmittel. Diese Zusammensetzung dient zur Herstellung von aus dem Isocyanat und Amin gebildeten Polyharnstoffen, wobei die Polyharnstoffbildung in Gegenwart der erfindungsgemäß vorgesehenen Nukleierungsmittel erfolgt.

Diese erfindungsgemäße Zusammensetzung umfasst das Nukleierungsmittel in einer Menge von vorzugsweise 0,001 bis 5,0 Gew.-%, bevorzugt 0,01 bis 2,00 Gew.-%, besonders bevorzugt 0,01 bis 1,00 Gew.-%, jeweils bezogen auf die Zusammensetzung, umfassend das Isocyanat, das Amin und das Nukleierungsmittel.

Die verwendeten Isocyanate können monomer mit mindestens zwei Isocyanatgruppen sein, polymer oder es werden Prepolymere eingesetzt, die aus Polyolen mit einem Überschuss Isocyanaten hergestellt werden und daher Isocyanat-Endgruppen aufweisen.

Die erfindungsgemäß vorgesehenen Nukleierungsmittel werden zur Herstellung von Polyharnstoffderivaten verwendet, die ausgehend von Isocyanaten und Aminen erhalten werden.

In einer bevorzugten Ausführungsform der vorliegenden Erfindung wird die Isocyanatkomponente des Polyharnstoffs ausgewählt aus der Gruppe, bestehend aus p-Xylylendiisocyanat, Tetramethylxylylendiisocyanat, Toluoldiisocyanat, 4,4'-Methylenbis(phenylisocyanat) (MDI), Toluoldiisocyanat (TDI); m-Xylylendiisocyanate (XDI); Hexamethylendiisocyanate (HDI), Methylen-bis-(4-cyclohexyldiisocyanate) (HDMI), Naphthalin-1,5-diisocyanate (NDI); 3,3'-Dimethyl-4,4'-biphenyldiisocyanate (TODI); 1,4-Diisocyanatbenzol (PPDI); Phenyl-1,4,4-diisocyanate; Trimethylhexamethyldiisocyanate (TMDI); Isophorondiisocyanate (IPDI); 1,4-Cyclohexyldiisocyanat (CHDI), insbesondere trans-1,4-Cyclohexylendiisocyanat; Diphenylether-4,4'-diisocyanat; p,p'-Diphenyldiisocyanat; Lysindiisocyanate (LDI); 1,3-Bis(isocyanatmethyl)cyclohexan; Polymethylpolyphenylisocyanat (PMDI); und Isomere und/oder Mischungen davon. Neben den vorstehend genannten Isocyanaten können auch deren höhermolekulare Folgeprodukte mit Uretdion-, Isocyanurat-, Urethan-, Allophanat-, Biuret-, Iminooxadiazindion-, Acylharnstoff- oder Oxadiazintrionstruktur sowie deren Mischungen eingesetzt werden, wie sie beispielsweise in J. Prakt. Chem. 336 (1994) 185 - 200 oder DE-A 16 70 666, DE-A 19 54 093, DE-A 24 14 413, DE-A 24 52 532, DE-A 26 41 380, DE-A 37 00 209, DE-A 39 00 053, DE-A 39 28 503, EP-A 336 205, EP-A 339 396 und EP-A 798 299 beschrieben sind. Darüber hinaus können auch entsprechende Prepolymere verwendet werden; bezüglich dieser Prepolymere wird auf die nachfolgende Beschreibung im Rahmen der einkomponentigen (1 K)-Polyurethansysteme verwiesen.

Bei der Aminkomponente des Polyharnstoffs kann es sich um n-aliphatische Amine, beispielsweise Ethylamin, n-Propylamin, sec.-Propylamin, n-Butylamine, sec.-Butylamin, tert.-Butylamin, n-Pentylamin, α-Methylbutylamin, α-Ethylpropylamin, β-Ethylbutylamin, Hexylamin, Octylamin, Decylamin, Dodecylamin, Stearylamin, aber auch um cycloaliphatische oder aromatische Amine, beispielsweise Cyclohexylamin, Anilin, Benzylamin oder 2-Phenylethylamin, handeln.

Für die Herstellung des Polyharnstoffs werden die Isocyanatkomponente und das Amin bevorzugt in annähernd äquimolaren Mengen zur Reaktion gebracht, wobei das molare Verhältnis von Isocyanatgruppen zu Amingruppen vorzugsweise zwischen 0,8 und 1,2, bevorzugt zwischen 0,9 und 1,1, besonders bevorzugt zwischen 0,95 und 1,05 liegt.

Zur besseren Steuerung der Reaktion kann der Polyharnstoff in einem inerten Medium, wie z. B. Weichmacher, Kohlenwasserstoffen, etc. hergestellt werden, d. h. die Umsetzung von Isocyanat und Amin erfolgt dann in dem inerten Medium. Desweiteren kann die Umsetzung auch in einem reaktiven Medium erfolgen, wie dies in der EP 1152019 A1 beschrieben ist. Es hat sich als zweckmäßig erwiesen, Isocyanat und Amin jeweils in dem Medium zu lösen und das erfindungsgemäße Thixotropiermittel durch Mischen beider Lösungen herzustellen.

Ausgehend von dieser Zusammensetzung, umfassend mindestens eine Isocyanatkomponente, mindestens eine Aminkomponente und mindestens ein erfindungsgemäßes Nukleierungsmittel, ist ein erfindungsgemäßes Polyharnstoffaddukt aus der Isocyanatkomponente und der Aminkomponente zugänglich, welches in Gegenwart des erfindungsgemäßen Nukleierungsmittels erhalten wird.

Des Weiteren betrifft die vorliegende Erfindung daher auch ein Verfahren zur Herstellung einer Polyharnstoffverbindung, in welchem mindestens ein Isocyanat mit mindestens einem Amin umgesetzt wird und die Umsetzung in Gegenwart eines wie zuvor beschriebenen Nukleierungsmittels durchgeführt wird. Hinsichtlich der einzelnen Komponenten der Polyharnstoffverbindung wird auf obige Ausführungen verwiesen.

Wie den oben stehenden Beispielen für das Nukleierungsmittel zu entnehmen ist, kann es sich bei dem Nukleierungsmittel dabei zumindest partiell um Stoffe handeln, die in der natürlichen Umgebung vorhanden sind und somit quasi latent, d.h. beispielsweise als unbeabsichtigte Verunreinigung, in einem erfindungsgemäßen Verfahren zur Herstellung von Polyharnstoffverbindungen zugegen sein können.

Zur Steuerung der gewünschten Eigenschaften der Polyharnstoffverbindungen ist es daher entscheidend, dass diese Nukleierungsstoffe nicht zusätzlich latent, also beispielsweise als Verunreinigung, zusätzlich zu den erfindungsgemäß vorgesehenen Nukleierungsstoffe zugegen sind. Wenn nicht auf die Abwesenheit entsprechender Fremdpartikel geachtet wird, hat dieses als Folge, das die Gesamtkonzentration und Form an Nukleierungsmittel durch die zusätzlichen Fremdpartikel nicht genau bestimmt ist und somit die Wirkungsweise der Nukleierungsmittel nicht abgeschätzt werden kann und daher keine Polyharnstoffe erhalten werden, die konstante Eigenschaften als rheologisches Additiv bzw. Thixotropiermittel aufweisen.

Darüber hinaus ist es in einer weiteren Ausführungsform der vorliegenden Erfindung möglich, die erfindungsgemäßen Nukleierungsmitteln in einer großen Menge zu verwenden. Durch ein entsprechendes Überimpfen mit den erfindungsgemäß vorgesehenen Nukleierungsmitteln wird der Einfluss von gegebenenfalls zusätzlich latent vorhandenen Nukleierungsmitteln so weit reduziert, dass die Eigenschaften des Polyharnstoffs als rheologisches Additiv bzw. Thixotropiermittel nicht mehr von diesen latent vorhandenen Nukleierungsmitteln beeinflusst werden.

Daher ist im Rahmen der vorliegenden Erfindung insbesondere vorgesehen, dass das erfindungsgemäße Verfahren im Wesentlichen in der Abwesenheit von unerwünschten Fremdpartikeln durchgeführt wird. Unter "im Wesentlichen in der Abwesenheit von unerwünschten Fremdpartikeln" wird dabei im Rahmen der vorliegenden Erfindung allenfalls eine Konzentration von Fremdpartikeln verstanden, die so gering ist, dass ihre Gegenwart keine Auswirkungen auf die Eigenschaften des erfindungsgemäßen Polyharnstoffaddukts, insbesondere im Hinblick auf die rheologischen Eigenschaften und die Thixotropieeigenschaften, aufweist.

Das erfindungsgemäße Verfahren wird jedoch selbstverständlich in Gegenwart einer definierten Menge des erfindungsgemäß vorgesehenen Nukleierungsmittels durchgeführt. Dabei wird die Umsetzung so durchgeführt, dass nur die Gegenwart von unerwünschten Mengen an Nukleierungsmittel als Verunreinigung ausgeschlossen wird.

Die erfindungsgemäße Herstellung von Polyharnstoffen in Gegenwart der nunmehr vorgeschlagenen Nukleierungsmittel erfolgt vorzugsweise wie oben beschrieben in Gegenwart eines inerten oder reaktiven Mediums wobei die Menge an Medium bis zu 95 Gew.-%, bezogen auf die Reaktionszusammensetzung, betragen kann.

Weiterer Gegenstand der vorliegenden Erfindung sind die durch das zuvor beschriebene Verfahren erhältlichen Polyharnstoffe bzw. Polyharnstoffaddukte.

Diese ebenfalls von der vorliegenden Erfindung umfassten Polyharnstoffaddukte eignen sich als rheologiemodifizierendes Mittel, insbesondere als Thixotropieradditiv, d.h. insbesondere zur Steuerung der Thixotropie, des Ablaufverhaltens und der Standfestigkeit, härtbarer Zusammensetzungen, insbesondere auf Basis von Polyurethansystemen und Systemen auf Basis von Alkoxysilan-funktionellen Prepolymeren.

Bei den entsprechenden Polyurethansystemen kann es sich um einkomponentige (1 K)-Polyurethansystemen oder um zweikomponentige (2K)-Polyurethansysteme handeln.

Im Folgenden werden bevorzugte Ausgestaltungen der härtbaren Zusammensetzungen beschrieben, wobei die erfindungsgemäßen Polyharnstoffe in diesen Zusammensetzungen als rheologiemodifizierendes Mittel, insbesondere als Thixotropieradditiv sowie zur Steuerung der Thixotropie, des Ablaufverhaltens und der Standfestigkeit, eingesetzt werden.

### Einkomponentige (1K)-Polyurethansysteme

Feuchtigkeitshärtende einkomponentige Polyurethanzusammensetzungen enthalten Isocyanatgruppen-aufweisende Polyurethanprepolymere, die unter dem Einfluss von Luftfeuchtigkeit Anlass zur Vernetzung geben.

Diese Isocyanatgruppen aufweisenden Prepolymere werden typischerweise aus Polyolen und Polyisocyanaten gewonnen. Als Polyole hierfür geeignet sind insbesondere Di- und Triole, insbeondere Polyesterdiole, -triole und Polyoxyalkylendiole und -triole, auch Polyetherdiole und -triole, Polycarbonatdiole, -triole sowie deren Kombinationen.

Es hat sich insbesondere als vorteilhaft herausgestellt, wenn Polyoxyalkylenpolyole verwendet werden, welche einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren). Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 - 30000 g/mol, sowie Polyoxypropylendiole und -triole mit einem Molekulargewicht Mₙ von 400 - 8000 g/mol.

Als Polyisocyanate für die Herstellung eines Isocyanatgruppen aufweisenden Polyurethanprepolymers können beispielsweise die folgenden handelsüblichen Polyisocyanate verwendet werden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, mund p-Xylylendiisocyanat (m- und p-XDI), 1,3- und 1,4-Tetramethylxylylendiisocyanat (m- und p-TMXDI), Bis-(1-isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

### Zweikomponentige (2K)-Polyurethansysteme

Zweikomponentige Polyurethanharzzusammensetzungen können über Additionsreaktionen beim Mischen der zwei Komponente vernetzen.

Das zweikomponentige (2K)-Polyurethan umfasst mindestens zwei Bestandteile F1 und F2, wobei der Bestandteil F1 ein Polyisocyanat oder eine Mischung von Polyisocyanaten ist und der Bestandteil F2 ein Polyol, ein Polyamin, eine Mischung von Polyolen, eine Mischung von Polyaminen oder eine Mischung von Polyolen und Polyaminen sein kann.

Wenn der Bestandteil F2 ein Polyol ist, kann es sich um ein Diol, ein Triol, ein Tetraol oder ein höherfunktionelles Polyol handeln. Vorzugsweise ist der Bestandteil F2 ein Diol oder Triol. Geeignet hierfür sind insbesondere Polyesterdiole, -triole und Polyoxyalkylendiole und -triole, auch Polyetherdiole und -triole, und Polycarbonatdiole, -triole sowie deren Kombinationen.

Dabei können nicht nur Polyoxyalkylenpolyole verwendet werden, die einen niedrigen Gehalt an ungesättigten Bindungen (gemessen nach ASTM D-2849-69 und angegeben in Milliequivalent Ungesättigtheit pro Gramm Polyol (mEq/g)) aufweisen und welche zum Beispiel mittels Doppelmetallcyanid-Katalysatoren (DMC-Katalysatoren) hergestellt werden, sondern auch Polyoxyalkylenpolyole, die einen höheren Gehalt an ungesättigten Bindungen aufweisen und welche beispielsweise mittels anionischen Katalysatoren, wie NaOH, KOH oder Alkalimetallalkoxiden, hergstellt werden können.

Des Weiteren als Polyol geeignet sind:
- Polyacrylat- und Polymethacrylatpolyole;
- Kohlenwasserstoffpolyole, welche auch als Oligohydrocarbanole bezeichnet werden, wie polyhydroxyfunktionelle Ethylen-Propylen-, Ethylen-Butylen- oder Ethylen-Propylen-Dien-Copolymere, die beispielsweise kommerziell vertrieben werden von Kraton Polymers, oder polyhydroxyfunktionelle Copolymere von Dienen, wie 1,3-Butadien oder Mischungen von Dienen und Vinylmonomeren, wie Styrol, Acrylnitril oder Isobutylen oder polyhydroxyfunktionelle Polybutadienpolyole, wie diejenigen, welche copolymerisiert werden ausgehend von 1,3-Butadien und Allylalkohol und welche hydriert sein können;
- polyhydroxyfunktionelle Acrylnitril/Butadien-Copolymere, wie diejenigen, welche ausgehend von Epoxiden oder Aminoalkoholen erhalten werden, und Acrylnitril/Butadien-Copolymere, welche mit Carboxylgruppen terminiert sind (kommerziell erhältlich unter der Bezeichnung Hypro^{®} CTBN von CVC Thermoset Specialities);
- niedrigmolekulare Polyole (Molekulargewicht unter 300 g/mol), insbesondere zweiwertige oder mehrwertige Alkohole mit niedrigem Molekulargewicht wie beispielsweise 1,2-Ethandiol, 1,2- und 1,3-Propandiol, Neopentylglykol, Diethylenglykol, Triethylenglykol, isomere Dipropylenglykole und Tripropylenglykole, isomere Butandiole, isomere Pentandiole, isomere Hexandiole, isomere Heptandiole, isomere Octandiole, isomere Nonandiole, isomere Decandiole, isomere Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerol, Pentaerythritol, Zuckeralkohole und andere mehrwertige Alkohole, Rizinusöl, niedermolekulare Alkoxylierungsprodukte der zuvor bezeichneten zweiwertigen und mehrwertigen Alkohole und auch Mischungen der zuvor genannten Alkohole.

Beispiele für Polyamine sind:
Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methylbis(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,2-, 1,3- und 1,4-Diaminocyclohexan, Bis(4-aminocyclohexyl)-methan, Bis(4-amino-3-methylcyclohexyl)methan, Bis(4-amino-3-ethylcyclohexyl)methan, Bis(4-amino-3,5-dimethylcyclohexyl)methan, 1-Amino-3-aminomethyl-3,5,5-trimethylcyclohexan (Isophorondiamin oder IPDA), 2- und 4-Methyl-1,3-diaminocyclohexan und Mischungen davon, 1,3- und 1,4-Bis(aminomethyl)cyclohexan, 1-Cyclohexylamino-3-aminopropan, 2,5(2,6)-Bis(aminomethyl)bicyclo[2.2.1]heptan (NBDA, hergestellt von Mitsui Chemicals), 3(4),8(9)-Bis(aminomethyl)-tricyclo[5.2.1.02,6]decan, 1,4-Diamino-2,2,6-trimethylcyclohexan (TMCDA), 3,9-Bis(3-aminopropyl)-2,4,8,10-tetraoxaspiro[5.5]undecan, 1,3- und 1,4-Xylylendiamin, aliphatische Polyamine enthaltend Ethergruppen wie Bis(2-aminoethyl)ether, 4,7-Dioxadecan-1,10-diamin, 4,9-Dioxado-decan-1,12-diamin und höhere Oligomere davon, Polyoxyalkylen-Polyamine mit zwei oder drei Aminogruppen, welche unter anderem erhältlich sind unter der Bezeichnung Jeffamine^{®} (hergestellt von Huntsman Chemicals) und Mischungen der zuvor genannten Polyamine.

Der Bestandteil F1 umfasst mindestens ein Polyisocyanat. Beispiele für geeignete Polyisocyanate sind:
Toluol-2,4- und -2,6-diisocyanat (TDI) und jede gewünschte Mischung dieser Isomere, Diphenylmethan 4,4'-, 2,4'- und 2,2'-Diisocyanat und jede gewünschte Mischung dieser Isomere (MDI), Phenylen-1,3- und 1,4-diisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Anisidindiisocyanat (DADI), Hexamethylen-1,6-diisocyanat (HDI), 2-Methylpentamethylen-1,5-diisocyanat, 2,2,4- und 2,4,4-Trimethylhexamethylen-1,6-diisocyanat (TMDI), Decamethylen-1,10-diisocyanat, Dodecamethylen-1,12-diisocyanat, Lysindiisocyanat, Lysinester Diisocyanat, Cyclohexan-1,3- und 1,4-Diisocyanat und jede gewünschte Mischung dieser Isomere, 1-Isocyanato-3,3,5-trimethyl-5-isocyanatomethylcyclohexan (Isophorondiisocyanat oder IPDI), 1-Methyl-2,4- und -2,6-diisocyanatocyclohexan und jede Mischung davon (HTDI oder H6TDI), Perhydrodiphenylmethan-2,4'- und 4,4'-diisocyanat (HMDI oder H12MDI), 1,4-Diisocyanato-2,2,6-trimethylcyclohexan (TMCDI), m- und p-Xylylendiisocyanat (XDI), Tetramethylxylylen-1,3- und 1,4-diisocyanat (TMXDI), 1,3-und 1,4-Bis(isocyanatomethyl)cyclohexan, Bis-(1-isocyanato-1-methylethyl)-naphthalin darüber hinaus Oligomere und Polymere der zuvor bezeichneten Isocyanate und darüber hinaus jede gewünschte Mischung der vorbezeichneten Isocyanate. Bevorzugt als Polyisocyanate sind Diisocyanate. Besonders bevorzugt sind aromatische Diisocyanate. Noch weiter bevorzugt als Polyisocyanat ist Methylendiphenyl-4,4'-diisocyanat, Methylendiphenyl-2,4'-diisocyanat, Methylendiphenyl-2,2'-diisocyanat (MDI) oder Homologe davon (polymeres MDI oder PMDI).

Darüber hinaus kann der Bestandteil F1 weitere Polyurethanpolymere mit Isocyanatgruppen, wie Polyurethanprepolymere, umfassen. Geeignete Polyurethanpolymere dieser Art werden hergestellt ausgehend von mindestens einem Polyisocyanat und mindestens einem zuvor erwähnten Polyol und/oder mindestens einem der vorstehend beschriebenen Polyamine.

Ein Beispiel für ein zweikomponentiges (2K) Polyurethan-System ist in der EP 1 997 616 A1 beschrieben.

Im Rahmen von 2K-Polyurethansystemen findet der Gegenstand der vorliegenden Erfindung insbesondere im Bereich Beschichtungen Anwendung.

### Systeme auf Basis von Alkoxysilan-funktionellen Prepolymeren

Unter "Alkoxysilan" wird im Rahmen der vorliegenden Erfindung eine Organosilizium-Verbindung verstanden, bei welcher mindestens ein organischer Rest über eine Kohlenstoff-Silizium-Bindung an das Siliziumatom gebunden ist und die mindestens einen weiteren organischen Rest aufweist, welcher über eine Sauerstoff-Silizium-Bindung an das Siliziumatom gebunden ist.

Es gibt nun unterschiedliche Zusammensetzungen auf Basis von Alkoxysilanfunktionellen Prepolymeren. Insbesondere sind bevorzugt diejenigen, welche auf einem der drei folgenden Typen von alkoxysilanfunktionellen Prepolymeren beruhen:
(i) silanfunktionelles Polyurethanprepolymer **P1,** erhältlich durch die Umsetzung eines Aminoalkoxysilans mit einem Isocyanatgruppen aufweisenden Polyurethanprepolymer
(ii) silanfunktionelles Polyurethanprepolymer **P2**, erhältlich durch die Umsetzung eines Isocyanatoalkoxysilans mit einem Polyol oder Hydroxylgruppen aufweisenden Prepolymer
(iii) silanfunktionelles Prepolymer **P3**, erhältlich durch die Hydrosilylierung eines Polymers oder Prepolymers mit endständigen Doppelbindungen.

Das silanfunktionelle Polyurethanprepolymer **P1** wird bevorzugt aus einem für die einkomponentigen feuchtigkeitshärtenden Polyurethanmaterialien bereits beschriebenen Isocyanatgruppen aufweisenden Polyurethanprepolymer und einem Aminoalkoxysilan hergestellt. Als Aminosilane sind insbesondere Di- und Trialkoxysilane, welche einen oder mehrere organische, an das Siliziumatom über eine Si-C-Bindung gebundenen Reste aufweisen, welche mindestens eine Aminogruppe aufweisen, geeignet.

Das silanfunktionelle Polyurethanprepolymer **P2** wird bevorzugt aus den für die Herstellung der Isocyanatgruppen aufweisenden Polyurethanprepolymeren verwendeten und bereits beschriebenen Polyole und Polyisocyanate hergestellt. Allerdings wird durch die Stöchiometrie die Reaktion derart gestaltet, dass hydroxylgruppenaufweisende Prepolymere entstehen. Als Isocyanatoalkoxysilane sind insbesondere Di- und Trialkoxysilane, welche einen oder mehrere organische, an das Siliziumatom über eine Si-C-Bindung gebundenen Reste aufweisen, welche mindestens eine Isocyanatgruppe aufweist, geeignet.

Beispiele für kommerziell verfügbare silanfunktionelle Polyurethanpolymere **P2** sind die Produkte mit den Handelsnamen SPUR^{+®} 1010LM, 1015LM und 1050MM (alle von GE); sowie Geniosil^{®} STP-E15 und Geniosil^{®} STP-E35 (beide von Wacker Chemie AG).

Das silanfunktionelles Prepolymer **P3**, erhältlich durch die Hydrosilylierung eines Prepolymers mit endständigen Doppelbindungen. Als Prepolymere mit endständigen Doppelbindungen sind beispielsweise Poly(meth)acrylatpolymere oder Polyetherpolymere, insbesondere von allylterminierten Polyoxyalkylenpolymeren, wie sie beispielsweise in US 3,971,751 und US 6,207,766 beschrieben sind, geeignet.

Beispiele für kommerziell verfügbare silanfunktionelle Polymere **P3** sind die Produkte mit den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S (alle von Kaneka); Polymer ST50 (von Hanse-Chemie); sowie Excestar^{®} S2410, S2420, S3430, S3630, W2450 und MSX931 (alle von Asahi Glass).

Im Rahmen der vorliegenden Erfindung ist die Verwendung von erfindungsgemäßen Polyharnstoffen in den oben stehenden härtbaren Zusammensetzungen bevorzugt. Der erfindungsgemäße Polyharnstoff wird dabei als rheologiemodifizierendes Additiv, insbesondere als Thixotropieadditiv, in den vorstehenden härtbaren Systemen in einer Menge von vorzugsweise 1 bis 50 Gew.-%, weiter bevorzugt 3 bis 35 Gew.-%, insbesondere bevorzugt 5 bis 25 Gew.-%, verwendet.

Als zusätzliche Komponenten in den beschriebenen härtbaren Zusammensetzungen können unter anderem folgende weitere Hilfs- und Zusatzmittel vorhanden sein:
a) Weichmacher, beispielsweise Ester organischer Carbonsäuren oder deren Anhydride; Phthalate, wie beispielsweise Dinonylphthalat, Diisodecylphthalat und Diundecylphthalat; Adipate, wie zum Beispiel Dioctyladipat; Sebacate; organische Phosphor-und Sulfonsäureester; Polybutene und andere mit Isocyanaten, Alkoholen und Aminen nicht reagierende Verbindungen sowie Mischungen hiervon;
b) Lösemittel;
c) Anorganische und organische Füllstoffe, wie zum Beispiel gemahlene oder gefällte Calciumcarbonate, welche gegebenenfalls mit Stearaten beschichtet sind; Russe; Kaoline; Aluminiumoxide; Kieselsäuren; PVC-Pulver; Fasern, beispielsweise aus Polyethylen; Pigmente; Haftvermittler, insbesondere Silane, wie Epoxysilane, Vinylsilane, Isocyanatosilane und mit Aldehyden zu Aldiminosilanen umgesetzte Aminosilane; Trocknungsmittel, wie p-Tosylisocyanat und andere reaktive Isocyanate, Orthoameisensäureester, Calciumoxid oder Molekularsiebe; Katalysatoren; Stabilisatoren gegen Wärme, Licht- und UV-Strahlung; flammhemmende Substanzen; Oberflächenaktive Substanzen, wie Netzmittel, Verlaufsmittel, Entlüftungsmittel oder Entschäumer; Fungizide oder das Pilzwachstum hemmende Substanzen; Additive, die die Kratzbeständigkeit, den Glanz, den Verlauf, die Reflektionseigenschaften, die Reinigbarkeit oder die elektrischen Eigenschaften der Formulierungen beeinflussen;
d) sowie weitere in Polyurethanzusammensetzungen und Systemen auf Basis von Alkoxysilan-funktionellen Prepolymeren üblicherweise eingesetzte Substanzen.

Insbesondere die Verwendung von Tensiden ist im Rahmen der vorliegenden Erfindung bevorzugt, da Tenside für eine bevorzugte Verteilung und ein bevorzugtes Aggregationsverhalten der Nukleierungsmittel ermöglichen.

Der erfindungsgemäße Polyharnstoff kann als rheologiemodifizierendes Additiv, insbesondere als Thixotropieadditiv, in den vorstehenden härtbaren Systemen zusammen mit weiteren, allgemein üblichen rheologiemodifizierenden Additiven, insbesondere Thixotropieadditiven, eingesetzt werden. Diesbezüglich seien beispielhaft genannt
- als organische Thixotropiermittel: Castorölderivate, Metalseifen, Polymerverbindungen (z. B. Polyamid- und Polyethylenwachse) und anionische Verdicker (Sulfonate);
- als anorganische Thixotropiermittel: organische modifizierte Tone (Montmorillonite, Hectorite), pyrogene Kieselsäurederivate, Ruß und feinteilige Füllstoffe (z. B. Calciumcarbonate).

Weitere Beispiele grundsätzlich geeigneter Thixotropiermittel können z. B. J. Bieleman, Additives for Coatings, Wiley-VCH, Weinheim 2000 entnommen werden.

Die beschriebenen härtbaren Zusammensetzungen, d.h. die Polyurethansysteme bzw. Systeme auf Basis von Alkoxysilan-funktionellen Prepolymeren, sind im ausgehärteten Zustand geeignet als Dichtstoff aller Art, beispielsweise zum Abdichten von Baufugen, Bodenfugen, Fassaden, Fenstern, zum Abdichten von Lagerbehältern und Tanks, als Klebstoff für das Verkleben von diversen Substraten, beispielsweise zum Verkleben von Bauteilen bei der Herstellung von Automobilen, Schienenfahrzeugen, Schiffen oder anderen industriellen Gütern, zum Verkleben von Fenstern und Parkettbelägen sowie als Beschichtung, Belag oder Klebstoff für diverse Artikel beziehungsweise variable Untergründe. Als Beschichtungen bevorzugt sind Schutzanstriche, Versiegelungen, Schutzbeschichtungen und Primer. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Industriebauten, Werkstätten, Büros, Wohnbereiche, Krankenhäusern, Schulen, Lagerhallen, Parkgaragen und andere private oder industrielle Anwendungen verwendet. Weitere Anwendungen sind Beschichtungen für Tankanlagen, Auffangwannen, Kühltürmen, Brücken und Kellern sowie zur Abdichtung von Dächern, Behältern und Schwimmbädern.

Die vorliegende Erfindung wird anhand der nachfolgenden Beispiele näher erläutert.

Herstellungsbeispiel 1:
202,5 g an Diisodecylphthalat, 30,45 g an 4,4'-Methylendiphenyldiisocyanat und ein Nukleierungsmittel gemäß der nachfolgenden Tabelle 1 wurden in ein Reaktionsgefäß gegeben und auf 80 °C für zwei Stunden erwärmt. Das Reaktionsgefäß wurde unter einen Hochgeschwindigkeitsdissolver gestellt und die Mischung wurde mit 16,77 g Monobutylamin versetzt. Die Mischung wurde dann für zwei Minuten mit hoher Geschwindigkeit gerührt (2000 U/min).

Zur Bestimmung der Auspresskraft wird die erhaltene Polyharnstoffmischung mit einem isophorondiisocyanat-terminerten Polyurethan-Präpolymeren (Viskosität 20 Pas; bestimmt bei 20 °C und einer Schergeschwindigkeit von 50 s⁻¹ mit einem Rotationsviskosimeter mit Kegel-Platte-Geometrie) zu gleichen Gewichtsteilen unter Zugabe von 1 Gew.-% eines geeigneten Trockungsmittels, z. B. p-Toluolsulfonylisocyanat, und unter Anlegen von Vakuum intensiv vermischt. Diese Mischung wird in eine Aluminiumkartusche von 320 ml Volumen gefüllt, mit einem Aluminiumkolben verschlossen und einen Tag bei 23 °C konditioniert. Hiernach wird die Auspresskraft mit einer statischen Materialtestprüfmaschine Zwick 1550 geprüft. Zum Auspressen wird ein Mundstück mit einer 2mm-Öffnung verwendet, die Auspressgeschwindigkeit beträgt 60 mm/min.

Die Ergebnisse belegen einen linearen Zusammenhang zwischen den zugegebenen Teilchen und der Auspresskraft, wobei die zugegebenen Additive die Auspresskraft erniedrigen:

| Versuch | Additiv | Menge Additiv / g | Auspresskraft / N |
|---|---|---|---|
| 1 | - | - | 185 |
| 2 | NA-11 (Asahi Denka) | 0,25 | 176 |
| 3 | NA-11 (Asahi Denka) | 1,25 | 163 |
| 4 | NA-21 (Asahi Denka) | 1,25 | 155 |

Bei dem Nukleierungsmittel NA-11 handelt es sich um Natrium-2,2'-methylen-bis-(4,6-di-tert.-butylphenyl)phosphat, welches von Asahi Denka Kogyo K. K., Japan kommerziell erhältlich ist.

Herstellungsbeispiel 2:
In einem zweiten Versuch wurde der Polyharnstoff in einem Mikroreaktor hergestellt. 1900 g von einer Lösung an 4,4'-Methylendiphenyldiisocyanat in Diisodecylphthalat wurden auf 80 °C erwärmt und mit einer Fließrate von 310 ml/min in einen Einlass eines Mikroreaktors gepumpt. 1900 ml einer Lösung von Monobutylamin in Diisodecylphthalat, in welcher die in Tabelle 2 angegebenen Nukleierungsmittel dispergiert vorlagen, wurden in eine zweite Öffnung des Mikroreaktors gepumpt (ebenfalls mit einer Fließrate von 310 ml/min).

Die Ergebnisse bestätigen, dass mit dem Additiv NA-11 von Asahi Denka die Auspresskraft erniedrigt wird.

| Versuch | Additiv | Menge Additiv / g | Auspresskraft / N |
|---|---|---|---|
| 5 | - | - | 396 |
| 6 | NA-11 (Asahi Denka) | 0,80 | 392 |
| 7 | NA-11 (Asahi Denka) | 2,35 | 391 |
| 8 | NA-11 (Asahi Denka) | 4,62 | 384 |
| 9 | Lycopodium | 3,54 | 414 |

Beispiel 2 zeigt einerseits, dass mit dem Nukleierungsmittel NA-11 die Auspresskraft der resultierenden Polyharnstoffe erniedrigt wird, während andererseits das Nukleierungsmittel Lycopodium zu einer Erhöhung der Auspresskraft des resultierenden führt.

## Patentansprüche

1. Verwendung eines Nukleierungsmittels bei der Herstellung von Polyharnstoffaddukten aus mindestens einem Amin und mindestens einem Isocyanat, wobei das Nukleierungsmittel zu dem resultierenden Polyharnstoffaddukt aus dem mindestens einen Amin und dem mindestens einen Isocyanat nicht isomorph ist.

2. Verwendung nach Anspruch 1, **dadurch gekennzeichnet, dass** das Nukleierungsmittel einen Teilchendurchmesser von weniger als 500 µm aufweist und/oder dass das Nukleierungsmittel im Wesentlichen keine Löslichkeit in dem Reaktionsmedium, welches zur Herstellung des Polyharnstoffaddukts verwendet wird, aufweist.

3. Verwendung nach Anspruch 1 oder 2, **dadurch gekennzeichnet, dass** das Nukleierungsmittel bei einer Temperatur von unterhalb 150 °C und Normaldruck einen festen Aggregatzustand aufweist.

4. Verwendung nach einem der Ansprüche 1 bis 3, **dadurch gekennzeichnet, dass** das Nukleierungsmittel eine anorganische Komponente ist und die anorganische Komponente ausgewählt ist aus der Gruppe, bestehend aus Schwefelpulver; Silikapulver; Calcit; Metalloxiden, wie Magnesiumoxid, Titandioxid, Aluminiumoxid und Spinell; Glimmer; Talkum; Quarzmehl; Calciumcarbonat; Metallen, insbesondere Metallpulvern; Glasfasern; Kohlenstofffasern; Metallfasern; Glaspulvern; keramischen Pulvern; Diatomeenerde; Aluminiumsilikate; Flugasche; Metallsulfidpulvern; Metallcarbidpulvern und Gelpartikeln.

5. Verwendung nach einem der Ansprüche 1 bis 3, **dadurch gekennzeichnet, dass** das Nukleierungsmittel eine organische Komponente ist und die organische Komponente ausgewählt ist aus der Gruppe, bestehend aus Kohlenstaub, Pollen, Hefe, Sporen, Zuckerpulver, Agarpulvern, Gelatinepulvern, Holzstaub und Pflanzenfasern.

6. Verwendung nach einem der Ansprüche 1 bis 3, **dadurch gekennzeichnet, dass** das Nukleierungsmittel eine synthetische Komponente ist und die synthetische Komponente ausgewählt ist aus der Gruppe, bestehend aus Phosphaten; Kautschukpulvern; Cellulosepulvern; Polymerfasern; Polymerpulvern auf Basis von Polyethylen, Polyvinylchlorid, Polyamiden, Polyestern, Polystyrol und Teflon; Benzoaten; Carbonsäureestern und -salzen; Phosphorsäureestern und -salzen sowie Sorbitolderivaten.

7. Verwendung nach einem der Ansprüche 1 bis 6, **dadurch gekennzeichnet, dass** das Nukleierungsmittel Kohlenstoffnanotubes umfasst.

8. Verfahren zur Herstellung eines Polyharnstoffs durch Umsetzung von mindestens einem Isocyanat mit mindestens einem Amin, **dadurch gekennzeichnet, dass** die Umsetzung in Gegenwart eines Nukleierungsmittel durchgeführt wird, das zu dem resutierenden Polyharnstoffaddukt aus dem mindestens einen Amin und dem mindestens einen Isocyanat nicht isomorph ist.

9. Verfahren nach Anspruch 8, **dadurch gekennzeichnet, dass** das Nukleierungsmittel durch mindestens ein Merkmal gemäß einem der Ansprüche 2 bis 8 gekennzeichnet ist.

10. Polyharnstoff, erhältlich nach einem Verfahren gemäß Anspruch 8 oder 9.

11. Verwendung eines Polyharnstoffs gemäß Anspruch 10 als rheologiemodifizierendes Additiv in einer härtbaren Zusammensetzung.

12. Verwendung nach Anspruch 11, **dadurch gekennzeichnet, dass** die härtbare Zusammensetzung ein chemisch vernetzbares Systemen auf Basis von Polyurethanen oder auf Basis von alkoxysilan-funktionellen Prepolymeren umfasst.

13. Verwendung nach Anspruch 11 oder 12, **dadurch gekennzeichnet, dass** das Polyharnstoffaddukt in der härtbaren Zusammensetzung in einer Menge von 1 bis 50 Gew.-%, bezogen auf die Zusammensetzung, verwendet wird.

14. Härtbare Zusammensetzung, insbesondere auf Basis von Polyurethanen oder auf Basis von alkoxysilan-funktionellen Prepolymeren, umfassend mindestens ein Polyharnstoff gemäß Anspruch 10.

15. Verwendung einer härtbaren Zusammensetzung gemäß Anspruch 14 als Dichtstoff zum Abdichten von Baufugen, Bodenfugen, Fassaden, Fenstern, zum Abdichten von Lagerbehältern und Tanks; als Klebstoff für das Verkleben von Substraten, insbesondere zum Verkleben von Bauteilen bei der Herstellung von Automobilen, Schienenfahrzeugen, Schiffen oder anderen industriellen Gütern, zum Verkleben von Fenstern und Parkettbelägen; als Beschichtung, insbesondere Schutzanstrich, Versiegelung, Schutzbeschichtung und Primer, Beschichtung für Tankanlagen, Beschichtung für Auffangwannen, Beschichtung für Kühltürme, Beschichtung für Brücken, Beschichtung für Keller; zur Abdichtung von Dächern, Behältern und Schwimmbädern; als Belag, insbesondere Bodenbelag für Industriebauten, Werkstätten, Büros, Wohnbereiche, Krankenhäusern, Schulen, Lagerhallen, Parkgaragen und andere private oder industrielle Anwendungen.
